**Europäisches Patentamt**

**European Patent Office**

**Office européen des brevets**

(19)

(11) Publication number: **0 059 270**
**A1**

## (12) EUROPEAN PATENT APPLICATION

(21) Application number: **81200238.4**

(22) Date of filing: **27.02.81**

(51) Int. Cl.³: **B 65 G 39/09**
**F 16 C 13/02, F 16 C 33/80**
**F 16 J 15/447**

(43) Date of publication of application:
08.09.82 Bulletin 82/36

(84) Designated Contracting States:
AT BE CH DE FR IT LI LU NL SE

(71) Applicant: **Garnett, David Morris**
**Manse Lane**
**Knaresborough W. Yorkshire HG5 8LS(GB)**

(72) Inventor: **Garnett, David Morris**
**Manse Lane**
**Knaresborough W. Yorkshire HG5 8LS(GB)**

(74) Representative: **Denmark, James**
**c/o Bailey Walsh & Co. 5 York Place**
**Leeds LS1 2SD Yorkshire(GB)**

(54) **Improvements relating to bearing assemblies for use in conveyor rollers.**

(57) The bearings (18) fit into the ends of hollow sleeve bodies to define the rollers of the conveyor. The bearings (18) are designed to prevent the ingress of water through the bearings into the interior of the sleeve bodies, because collection of liquid in these bodies in unhygienic in food factory applications. The bearings (18) are designed to act as water seals by on the one hand the design of labyrinth seals between the inner and outer races (24, 26) of the bearings in that the labyrinth gaps (X, Y) are designed to allow outflow of liquid from the bearings, and on the other hand, when stub shaft axles are used, blanking plates to the inside of the sleeve body. The clearances are not made so large as to allow excessive inflow of liquid into the bearing. The labyrinth seal therefore acts in two ways. It limits inflow of liquid into the bearing and also allows outflow of that liquid from the bearing to prevent accumulation of liquid in the bearing.

Also, the stub shaft axles, when provided, are spring loaded outwardly and in accordance with another feature, the axle or axles is or are sealed to the bearings by O-rings (44) so that the bearings are movable axially of the axle or axles without loss of sealing.

./...

_FIG.3_

-1-

Improvments relating to bearing assemblies for use in conveyor rollers.

This invention relates to bearing assemblies for use in conveyor rollers.

Conveyor rollers are used extensively in industry when it is desired to provide a transportation system for products, boxes or the like extending for example between locations in a factory or from a despatch location to a location from which goods to be shipped can be loaded into a transportation vehicle. The rollers in fact combime to define the transportation surface or decking and these conveyor roller systems can be used for the transportation of large and small articles and objects alike, although the invention has particular in conveyor roller systems for the transportation of manually handleable items such as frozen chickens, loaves of bread, or boxes of articles such as tins of beans, and so on.

A conveyor roller essentially is a relatively simple article and comprises normally a sleeve body in the ends of which are located bearing assemblies. Means defining a spindle supported by a surrounding frame engages in the bearing assemblies whereby the sleeve body is free to rotate relative to the axis defined by the spindle. Although these rollers essentially are simple in nature, not much attention has been given to their design, and in fact the bearing assemblies which are still extensively used throughout the world are somewhat primitive and inefficient. For example, it is known to provide bearing assemblies which are simply plastic or wooden blocks, the spindle means locating directly in a bore in the wooden block or plastic block in sliding relationship therewith. Other known arrangements use roller bearings in the bearing assemblies, but these roller bearings traditionally have been constructed of steel. Such bearings have been and are liable to corrosion, as frequently the conveyor rollers must work in corrosive environments, at the very least where water and air are present, which gives rise to rusting of the bearings and loss of efficiency. It is imperative that the conveyor rollers be extremely free running, especially where they are used in gravity conveyor roller systems in which the decking is inclined, and the goods move along the roller decking by virtue of gravity. The discussed prior art roller systems have not been directed to the needs of and problems associated with conveyor roller systems.

Furthermore in roller conveyor systems, the demand for the bearings of each roller to be high accuracy, machined, components is not as great as in other engineering applications and consequently there have been devised bearing assemblies for conveyor rollers which are contructed from plastics material, and it has been found that the tolerances can be reasonably generous compared with precision made steel roller bearings, without any deleterious effect on the operation of the bearings, and indeed in some cases the generous tolerances enhance the operation of the roller as they make it run freer.

The ability of the roller to run freely is in fact of prime importance in a conveyor roller system, and care must be taken to ensure that the bearing assemblies at the ends of the sleeve body are not loaded axially one relative to the other, either when the roller is assembled or when it is place in position in the conveyor system frame. Considering firstly the conveyor system frame mounting, if the roller bearing is wedged into the frame, and the bearing assemblies at the ends of the sleeve body are roller bearings having inner and outer races, if the frame for example bears upon the inner races of the end bearings and urges them axially together, there will be a loading axially of the roller on the rolling elements on the bearings, preventing free-running of the roller bearing assembly on the rolling elements. Equally, if the spindle means is a long spindle which extends through the end bearings, if the fit between the spindle means and the inner races, for example, is so much of an interference fit that insertion of the spindlemeans requires considerable effort, this can in fact impose a similar type of axial loading on the inner races, and hence on the rolling elements, with the result that optimum free running of the sleeve body is not achieved. It is desireable in fact that when the roller is fitted in the roller transport system, the sleeve body should be capable of a limited degree of free axial movement relative to the spindle means. This is provided by ensuring that the bearing assemblies are a sliding fit on the spindle, means being provided to ensure that the degree of sliding of the bearings on the spindle means is limited. Because these systems are being used to a much greater extent in the food industry, much attention has been given to whether or not the use of these conveyor rollers, in all of their forms, gives rise to any hygiene problems. In fact they do give hygiene problems in that water and other liquids for example used for the washing down of the system, or dropping from the products carried by the system, tends to collect inside the sleeve bodies wherein it remains undetected, and from which it does not evaporate rapidly, leading in the final analysis to bacterial growth which is totally unacceptable in a food factory. Considerable effort and thought have been given to overcoming the problem of the ingress of water into the sleeve body in order to overcome the hygiene problems associated with the roller transport systems of the type in which the invention can be applied, and my invention in one of its aspects is concerned with the provision of a bearing assembly for a sleeve body of a conveyor roller of a roller transport system, by which the aforesaid problem concerning the ingress of liquid can be minimised, or substantially eliminated.

In accordance with a first aspect of the invention, a bearing assembly comprises an inner race and an outer race with rolling elements therebetween and one of the inner race and outer race is adapted to be in operative connection with a sleeve body, whilst the other is for operative connecton with a spindle means, and the inner and outer races co-operative to define a labyrinth seal therebetween, of which the labyrinth passage is dimensioned to resist the inflow of water, but is not so small as to prevent the outflow of water, said labyrinth seal being located at a greater diameter than the pitch circle diameter of the rolling elements of the bearing.

The inventive concept of this aspect might be summarised by stating that the labyrinth seal has been dimensioned, not in the fashion, as would be obvious, to provide a water seal by making the labyrinth passages as small in width as possible, but by increasing that width to provide an adequate outflow arrangement at the lower side as the bearing will in fact be disposed herewith its axis at roation more or less horizontal. The labyrinth seal is therefore used in a different fashion from the manner in which it is traditionally used, in that in the invention the labyrinth seal enables the inflow of a certain amount of water and the seal spacing is not minimised, but the invention provides the advantage that the labyrinth seal is not so small as to prevent the outflow of the water at the lower side of the bearing.

It should be mentioned that the spindle means may be a single spindle for each roller, and extending between spaced supports of the frame and through both bearing assemblies, or the spindle means may be defined by separate stub shafts which are respectively supported in said spaced frame members, but which are associated with the respective bearings, and do not extend completely through the roller.

Also, according to the first aspect of the invention there is provided a roller conveyor comprising a plurality of conveyor rollrs, each roller comprising a sleeve body receiving at the respective ends, bearing assemblies by which the roller is supported in a conveyor frame by spindle means engaging said bearing assemblies, each bearing assembly comprising a roller bearing having an inner race and an outer race with rolling elements therebetween, and one of the inner race and outer race is engaged in the adjacent end of the sleeve body, whilst the other is engaged by the spindle means, and of each bearing, the inner and outer race co-operate to define a labyrinth seal therebetween to the outside of the bearing having regard to the position of the bearing in relation to the sleeve body, and of which the labyrinth passage is dimensioned to resist the inflow of water, but is not so small as to prevent the outflow of water, when the conveyor is washed, said labyrinth seal being located at a greater diameter than the pitch circle diameter of the rolling elements of the bearing.

In accordance with a second aspect of the invention, which aspect is also concerned with the prevention of water ingress as discussed above, a bearing comprises a roller bearing having an inner race and an outer race with roller elements therebetweeen, and one of the inner race and outer race is adapted to be in operative connection with a sleeve body, whilst the other is for operative connection with the spindle means when in the form of a stub shaft, and there is a blanking panel which is connected to or integral with the race which receives the sleeve body, to blank off the roller elements from the interior of the sleeve body to prevent inflow of water into said sleeve body.

In a third aspect of the invention, the improvement is concerned with enabling the roller easily to be removed from the frame, in addition to being concerned with the prevention of water ingress.

In accordance with the third aspect of the invention, a bearing assembly for a conveyor roller comprises a roller bearing having an inner race and an outer race with rolling elements therebetween, and one of the inner race and outer race is adapted to be in operative connection with a sleeve body, whilst the other is in operative connection with a spindle means in the form of a stub shaft which projects from the bearing for engagement in a supporting frame member, and there is a blanking panel which is connected to or integral with the race which receives the sleeve body to blank off the roller elements from the interior of the sleeve body to prevent inflow of water into said sleeve body, the said spindle being spring loaded away from the blanking panel but being deflectible in use in a direction which is away from the race with which it co-operates so as not to load the races and which is towards the blanking panel against spring action.

By means of the invention, the stub spindles can be deflected against spring action to enable the positioning of same in and the removal of same from the conveyor frame quickly and easily, and when the roller is in position, the springs will not axially load the races.

A further aspect of the invention is concerned with the mounting of the bearings on the spindle means to ensure that there will be minimum axial loading on the races and in accordance with the fourth aspect of the invention there is provided a roller for a roller conveyor, said roller comprising a sleeve body receiving roller bearings in the ends thereof, at least one of the bearings comprising an inner race and an outer race with rolling elements therebetween, and one of the inner and outer races is in operative connection with the sleeve body, whilst the other is mounted on spindle means, and the race which is in operate connection with the spindle means is in use stationery and receives the spindle means with clearance, the bearing including a flexible seal sealing the said race to the spindle but allowing at least limited relative axial movement of the spindle means and said race.

It should be mentioned that the spindle means may be a single spindle for extending between spaced supports of the frame and extending through both bearings. Alternatively, the spindle means may be defined by separate stub shafts which are respectively for support in spaced frame members, but which are engaged in the respective bearings, and do not extend completely through the roller.

All aspects of the invention can be applied to driven rollers as well as gravity rollers.

Embodiments of the aspects of the present invention will now be described, by way of example, with reference to the accompanying drawings, wherein:-

Fig. 1 is a perspective view of part of a roller conveyor transport system;

Fig. 2 is a sectional elevation, taken on the line A-A in Fig. 1 showing detail of a roller of which several are shown in Fig. 1, Fig. 2 being diagrammatic in the bearing assembly constructional details;

Fig. 3 is a sectional elevation showing a bearing assembly in accordance with the invention, and for use in the roller illustrated in Fig. 2;

Figs 4 and 5 are sectional elevations similar to Fig. 3, but showing only parts of bearing assemblies according to two further embodiments of the invention;

Fig. 6 is a view similar to Fig. 2, showing a modified version of the roller according to the invention; and

Fig. 7 is a view similar to Fig. 3, but showing a bearing assembly for use in the roller of Fig. 6.

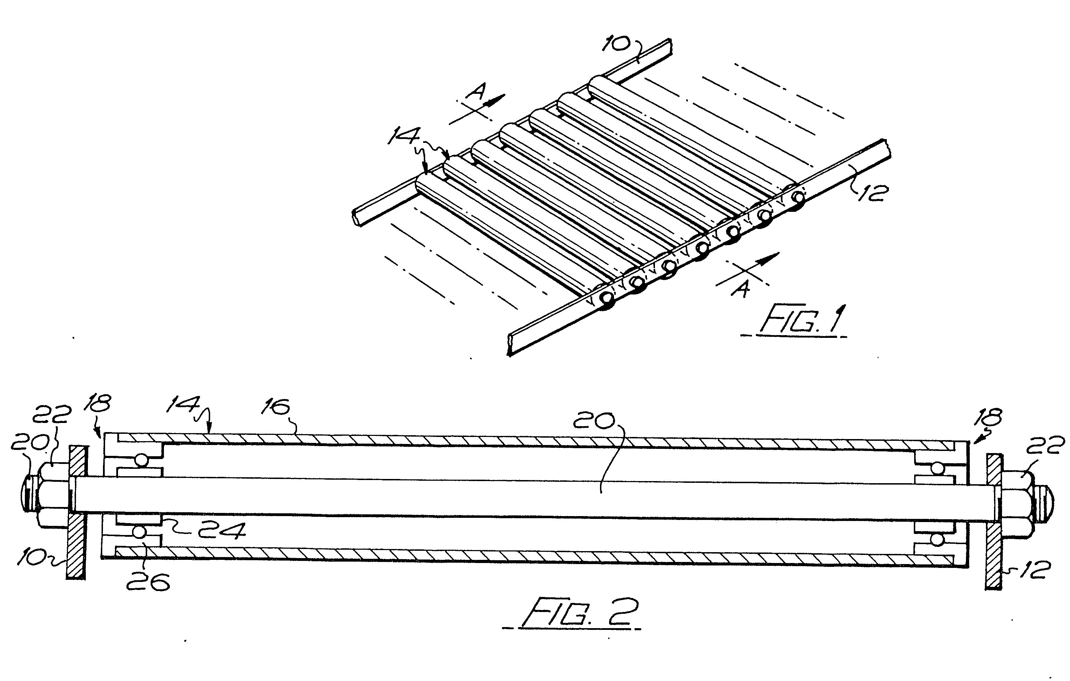

Referring to the drawings, in the arrangement of Figs 1 to 3 there is shown a section of a simple roller conveyor transport system comprising a pair of parallel side frame members or bars 10, 12 between which extend, in parallel fashion, the conveyor rollers 14. It should be mentioned that the arrangement illustrated is an extremely simple version of a roller conveyor transport system, and it has been illustrated in simplified fashion for the purpose of explanation. In practice, these systems will be much more complicated in having curves, parallel rows of rollers, and so on. The present invention is however concerned with the bearing structure, and not with the prticular conveyor layout.

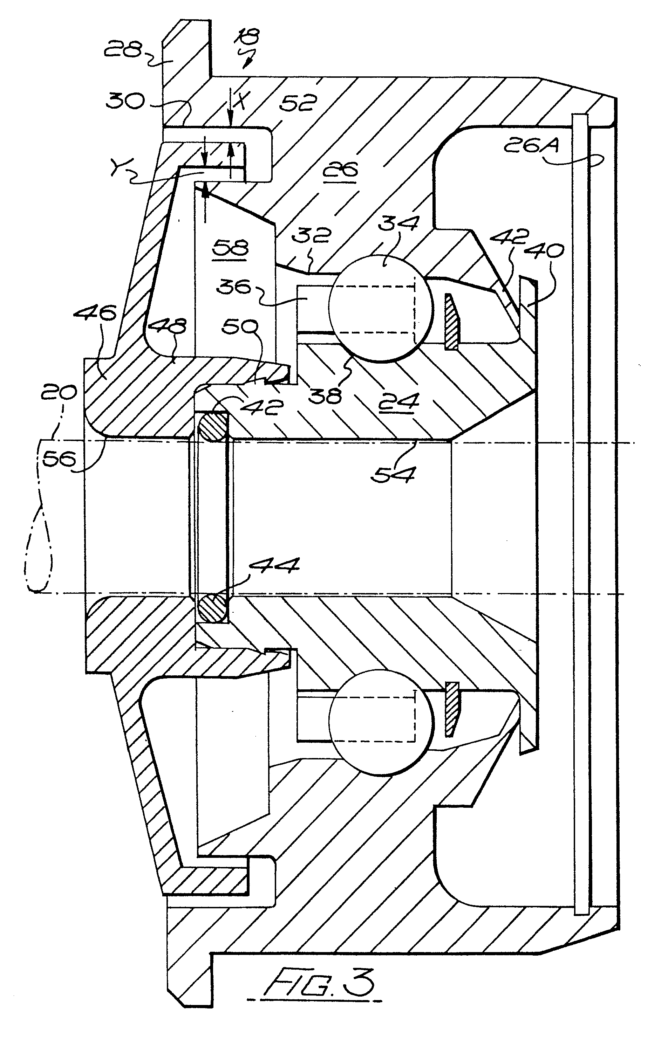

Each of the rollers 14 is diagrammaticaaly indicated in Fig. 2, and will be seen to comprise a sleeve body 16 in the ends of which are press fitted bearing assemblies 18. The brearing assemblies are on a central spindle 20 which passes through suitable apertures in the frame members 10 and 12, the spindle 20 being shown as anchored in fixed position by means of end nuts 22 which engage threaded ends of the spindle 20.

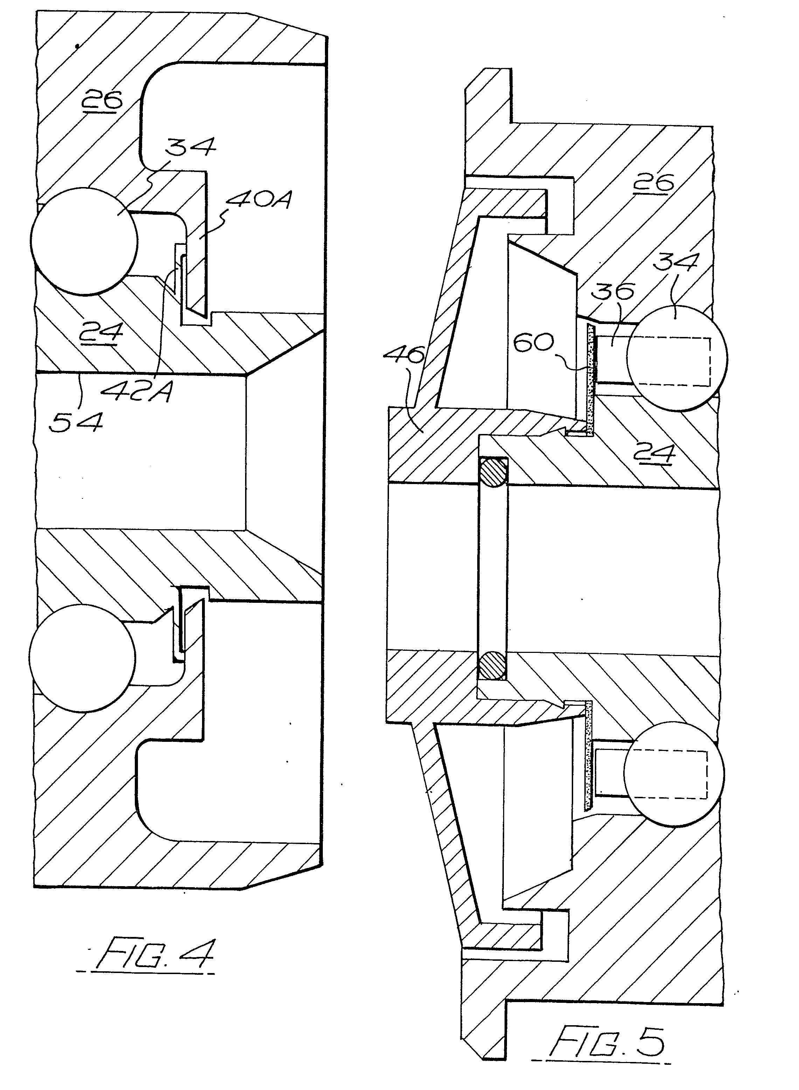

Each of the bearing assemblies 18 is shown in Fig. 2 to comprise an inner race 24 engaged on the spindle 20 and an outer race 26 over which the sleeve body 16 is frictionally engaged, there being rolling elements 34 (Fig. 3) between the races. In Fig. 2, the bearing assemblies are shown in much simplified form, but Fig. 3 shows in detail the construction of the bearing assembly 18 located at the left hand of the roller shown in Fig. 2. The bearing 18 at the right hand of the roller is of identical construction.

Referring now to Fig. 3, the bearing assembly 18 is shown in detail, and it will be seen that the outer bearing race 26 is provided with a flange 28 against which the sleeve body 16 can abut when it is friction fitted thereon. Additionally, towards the outside of the bearing, the outer race 26 is provided with a labyrinth groove 30. An outer race bearing surface 32 is engaged by the ball rolling elements 34 of the bearing assembly, said bearing elements 34 being held in a correct space disposition by means of a cage 36.

The inner race 24 is provided with a ball race surface 38 which is engaged by the said balls 34, and is also provided at its inner end with an outwardly directed flange 40 which is engaged by a conical lip seal 42 formed integrally in the outer race 26.

At its outer end, the inner race 24 is provided with a shoulder 42 in which is engaged a rubber O-ring seal 44, the seal 44 being prevented from falling from the bearing assembly by means of an end cap 46. The end cap 46 has an inwardly projecting ring 48 which snaps over a locating ring of the inner race, the engagement being retained by means of the conical projecting ring 50 on the inner race engaging a corresponding groove on the inner surface of ring 48.

The cap 46 has a labyrinth sealing ring 52 which lies in the labyrinth groove 30 of the outer race with clearance of particular dimensions as will be explained.

It will be noticed that the inner race 24 has a bore 54 of a suitable size to receive the spindle 20 (shown in dotted lines in Fig. 3), and also the cap 46 has a bore 56 which is identical in size to and co-axial with the bore 54, so that the spindle 20 can pass through the bearing assembly. It is to be mentioned that the O-ring seal 44 has an inner diameter which is slightly less than the common bore 56/54, and the ssindle 20 is adapted to be received in the common bore 56/54 with clearance, so tht in actual fact the seal between the spindle 20 and the bearing assembly along the bore 56/54, is in fact by contact between the O-ring seal 44 and the spindle 20 and not between the bore surfaces 56/54 and the spindle 20. This constitutes a significant departure in construction in a bearing assembly of this type, and also enables the bearing assembly to have the necessary axial freedom to float on the spindle as referred to herein, which is important for the prevention of pre-loading of the respective bearings 18 in the roller, which gives rise to friction running of the outer sleeve body 16. It will be noted that there is in fact no relative rotation between the spindle 20 and the inner race 24 and its end cap 46, and therefore the seal 44 provides an effective means for preventing the ingress of water into the inside of the sleeve body through either bearing assembly 18 along the surface of spindle 20.

The labyrinth gap has been referred to herein, and by this gap is meant the dimension such as dimension X or dimension Y between the relatively rotating surfaces of the labyrinth groove 30 and the labyrinth ring 52. It is also important that the labyrinth diameter be greater than the pitch circle diameter of the balls 38 for a purpose which will be clear from the following.

The bearing assembly is in use located in the disposition shown in Fig. 3, and when liquid falls on the bearing assembly or is sprayed thereonto for the purposes of washing same, some of the liquid will flow undoubtedly into the bearing assembly through the gaps X and Y and would do so even if the gaps X and Y were made as small as possible, and this water will tend to fill the interior of the bearing assembly for example in cavity 58, and around the balls and ball cage, and finally in the vicinity of the seal 42 and the flange 40. The liquid would accumulate were it not for the fact that the dimensions X and Y which, although shown at the top of the bearing assembly, of course also exist at the bottom of the bearing assembly as the components are rotary, and these clearances are designed such as to allow the liquid to run out of the bearing assembly. The unit is therefore designed so that the gaps X and Y to resist ingress of water and other liquids, but are not made so narrow that the egress of water out of the bottom of the bearing through the same labyrinth gaps is prevented. From a practical point of view, excellent results have been achieved in the case where the diameter of the labyrinth ring 52 is of the order of 47mm, when the X and Y spacings are made of the order of 2mm, and preferably in the range 1.7 to 2.3mm. When the bearing was tested with the labyrinth gaps X and Y of the order of 1.3mm the test liquid flowed into the bearing, but could not escape at the bottom end, and therefore filtered into the interior of the sleeve 16.

The seal arrangement 40 and 42 without the labyrinth seal was found not to be the complete answer for sealing the bearing, for the reason that the bearing illustrated, being completely of plastics material, except for the balls 34 which were of stainless steel to resist corrosion, and the O-ring seal 44 which was of rubber, had considerable tolerances in the interfitting of the parts, and in fact it is found that with the fitting of the sleeve body to the outer race 26, if the end of the sleeve body is not in a plane exactly at right angles to the sleeve body axis, and it is unusual to achieve such accuracy, because the sleeve bodies are usually cut from extruded plastic pipe, and there tends to be a loading on the outer race 26 making it slightly tilted relative to the inner race 24, and this tilting results in the seal 40/42 becoming less than perfect. An important feature therefore is in fact the design of the labyrinth seal as has been explained herein.

The bearing assemblies described are for plugging into the ends of bearing sleeves, but it is appreciated that this aspect of the invention could well be applicable in other applications. The bearing assembly can be made cheaply when the parts are moulded from plastics material as described, and assembly of the roller is facilitated by the fact that the spindle 20 sealingly engages only on the O-ring seal 44.

The said bearings could be used with stub axles instead of a through axle as indicated in Fig. 2 and to this end there may be a blanking panel (as shown in Fig. 7) snapped into the groove 26A in the race 26, positively to prevent ingress of water into the interior of the sleeve body. This arrangement is more particularly described in relation to Fig. 7.

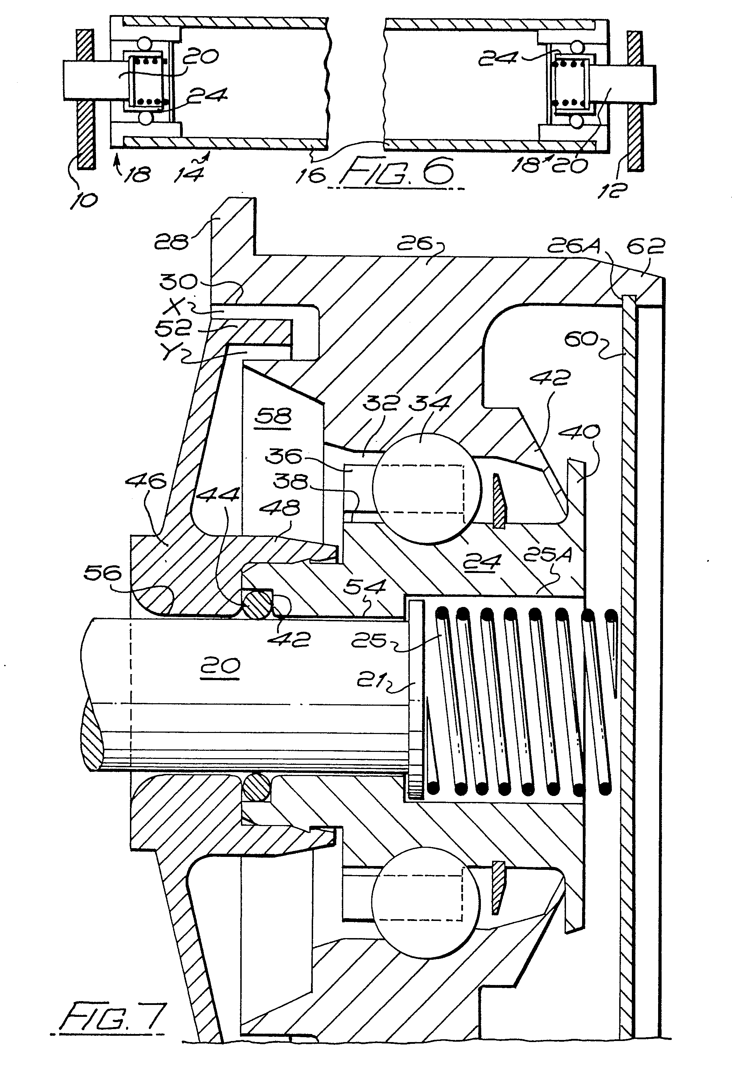

Referring briefly to Figs 4 and 5, of the parts illustrated, those which have already been described in relation to Fig. 3, carry the same reference numerals.

In the arrangement illustrated in Fig. 4, the outer race 26 is provided with a flange seal 40A, whilst the inner race 24 is provided with the sealing lip 42A, which is resiliently engaged on the sealing flange 40A, and which is outwardly projecting to prevent the passage of liquid into the interior of the sleeve body.

In the modification shown in Fig. 5, a sealing disc 60 is arranged to be trapped between the end cap 46 and the inner race 24 as shown, in order to more or less completely cover the gap between the races 24 and 26 housing the ball race and balls 36 and 34. This sealing ring 60 acts also to limit the ingress of liquid into the interior of the sleeve body.

Referring now to Figs. 6 and 7, wherein the same reference numerals, where appropriate, have been used, the outer race 26 is provided with a blanking disc 60 which fits into the groove 26A in a projection 62 of the outer race 26 as shown, effectively to blank and seal off the interior of the sleeve body 16 from the ingress of water. The blanking disc may be defined by a separate cap or it may be made integral with the outer race. With appropriate modications, where the inner race supports the sleeve body 16, the blanking disc may be associated with the inner race.

It will be seen also in Fig. 7 that the spindle 20 has an inner end flange 21 of a larger diameter than bore 54/6 and the flange lies in an enlarged bore section 25A of inner race 24, with clearance. A compression spring 61 acts between the disc 60 and the flange 21 to urge the stub axle 20 away from the disc 60, but not so as to load the inner and outer races together. The stub axle can be displaced readily and easily against the spring 25 for the release of same from the frame member 10, to remove the roller from the frame, which need only be provided with holes for receiving the spindles 20.

The bearing assemblies described are for plugging into the ends of bearing sleeves, but it is appreciated that this invention could well be applicable in other applications. The bearing assembly can be made cheaply when the parts are moulded from plastics material as described, and assembly of the roller is facilitated by the fact that the spindle 20 sealingly engages only on the O-ring seal 44.

CLAIMS

1.        A bearing assembly for a roller comprising an inner race and an outer race with rolling elements therebetween, and one of the inner and outer race is adapted to be in operative connection with a sleeve body, whilst the other is for operative connection with a spindle means, and the inner and outer races co-operate to define a labyrinth seal therebetween of which the labyrinth passage is dimensioned to resist the inflow of water, but is not so small as to prevent the outflow of water, said labyrinth seal being located at a greater diameter than the pitch circle diameter of the rolling elements of the bearing.

2.    A bearing assembly according to Claim 1, wherein the labyrinth seal is defined by an annular groove in one of said races and an annular rim on the other of said races which is located in said annular groove with clearance.

3.    A bearing assembly according to Claim 2, wherein the diameter of said annular rim is of the order of 47mm and the minimum and maximum clearance sizes of the labyrinth seal are 1.7mm and 2.3mm respectively.

4.    A bearing assembly according to Claim 1, wherein the labyrinth seal is to one side of the rolling elements of the bearing and to the other side of said elements there is a lip seal contact between extrusions of the inner and outer races.

5.    A roller conveyor comprising a plurality of conveyor rollers, each roller comprising a sleeve body receiving at the respective ends bearing assemblies by which the roller is supported in a conveyor frame by spindle means engaging said bearing assemblies, each bearing assembly comprising a roller bearing having an inner race and an outer race with rolling elements therebetween, and one of the inner and outer race is engaged in the adjacent end of the sleeve body, whilst the other is engaged by the spindle means, and of each bearing, the inner and outer races co-operate to define a labyrinth seal therebetween to the outside of the bearing having regard to the position of the bearing in relation to the sleeve body, and of which the labyrinth passage is dimensioned to resist the inflow of water, but is not so small s to prevent the outflow of water, when the conveyor is washed, said labyrinth seal being located at a greater diameter than the pitch circle diameter of the rolling elements of the bearing.

6. A bearing assembly comprising a roller bearing having an inner race and an outer race with rolling elements therebetween and one of the inner and outer race is adapted to be in operative connection with a sleeve body, whilst the other is for operative connection with the spindle means when in the form of a stub shaft, and there is a blanking panel which is connected to or integral with the race which receives the sleeve body to blank off the roller elements from the interior of the sleeve body to prevent inflow of water into said sleeve body.

7. A roller conveyor comprising a plurality of conveyor rollers, each roller comprising a sleeve body receiving at the respective ends bearing assemblies by which the roller is supported on a conveyor frame by means of stub shafts carried by the frame and engaged in the said bearing assemblies, each bearing assembly comprising a roller bearing having an inner race and an outer race with rolling elements therebetween, and one of the inner and outer races is engaged in the adjacent end of the sleeve body, whilst the other is engaged by the associated stub shaft, and a blanking panel connected to or integral with the race which is received in said sleeve body to blank off the roller elements from the interior of the sleeve body to prevent inflow of water into the sleeve body when the roller conveyor is washed.

8. A bearing assembly for a conveyor roller comprising a roller bearing having an inner race and an outer race with rolling elements therebetween, and one said inner and outer races is adapted to be in oprative connection with a sleeve body, whilst the other is in operative connection with a spindle means in the form of a stub shaft which projects from the bearing for engagement in a supporting panel member, there is a blanking panel which is connected to or integral with the race which receives the sleeve body to blank off the roller elements from the interior of the sleeve body to prevent inflow of water into said sleeve body, the said spindle being spring loaded away from the blanking panel but is deflectible in use in a direction which is away from the race with which it co-operates so as not to load the races and which is towards the blanking panel against spring action.

9. A conveyor roller for a roller conveyor said roller comprising a sleeve body in the ends of which are received bearing assemblies each comprising a roller bearing having an inner race and an outer race with rolling elements therebetween, and one of said inner and outer races receives the sleeve body, whilst the other is in operative connection with a spindle means in the form of a stub shaft which projects from the bearing for engagement in a supporting frame member, and there is a blanking panel which is connected to or ingtegral with the race which receives the sleeve body to blank off the roller elements from the interior of the sleeve body to prevent inflow of water into said sleeve body, the said spindle being spring loaded away from the blanking panel but deflectible in use away from the race with which it co-operates so as not to load the races and towards the blanking panel against spring action.

10. A roller for a roller conveyor, said roller comprising a sleeve body receiving roller bearings in the ends thereof, at least one of the bearings comprising an inner race and an outer race with rolling elements therebetween, and one of the inner and outer races is in operative connection with the sleeve body, whilst the other is mounted on spindle means, and the race which is in operative connection with the spindle means is in use stationery and receives the spindle means with clearance, the bearing including a flexible seal sealing the said race to the spindle but allowing at least limited relative axial movement of the spindle means and said race.

11. A roller conveyor comprising a plurality of conveyor rollers, each roller comprising a sleeve body receiving roller bearings in the ends thereof, at least one of the bearings comprising an inner race and an outer race with rolling elements therebetween, and one of the inner and outer races is in operative connection with the sleeve body, whilst the other is mounted on spindle means, and the race which is in operative connection with the spindle means is in use stationery and receives the spindle means with clearance, the bearing including a flexible seal sealing the said race to the spindle but allowing at least limited relative axial movement of the spindle means and said race.

_FIG.1_

_FIG. 2_

0059270

FIG. 3

0059270

FIG. 4

FIG. 5

0059270

_FIG. 6_

_FIG. 7_

# European Patent Office

## EUROPEAN SEARCH REPORT

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 1 362 910 (ZOELLER et al.) <br> * page 1, line 9 to page 2, line 71; fig. 2 * <br> -- | 1,2, 5-7 | B 65 G 39/09 <br> F 16 C 13/02 <br> F 16 C 33/80 <br> F 16 J 15/447 |
| | GB - A - 2 041 111 (UNIVERSAL CONVEYOR CO. LTD.) <br> * page 1, lines 57 to 59; fig. 1 * <br> -- | 1,2,4, 10,11 | |
| | DE - U - 6 940 449 (AMTEC KG) <br> * page 1, line 1 to page 4, line 3 * <br> -- | 1,2,4, 5 | TECHNICAL FIELDS SEARCHED (Int. Cl.³) |
| | DD - A - 98 145 (SERNETZ) <br> * column 1 , line 1 to column 3, line 58 * <br> & US - A - 3 799 634 <br> -- | 1,5 | B 65 G 13/00 <br> B 65 G 39/00 <br> F 16 C 13/00 |
| | DD - A - 66 833 (BINDER & CO.) <br> * column 2, line 7 to column 3, line 28; fig. * <br> -- | 1,5 | F 16 C 33/00 <br> F 16 C 35/00 <br> F 16 J 15/00 |
| | DE - U - 1 909 194 (H. VOM STEIN OHG) <br> * page 1, line 1 to page 2, line 12 * <br> -- | 4 | CATEGORY OF CITED DOCUMENTS |
| | US - A - 2 141 810 (CARROLL) <br> * fig. 1 * <br> -- | 6,7 | X: particularly relevant <br> A: technological background <br> O: non-written disclosure . <br> P: intermediate document <br> T: theory or principle underlying the invention |
| | DE - A - 1 400 313 (LICENTIA PATENT-VERWALTUNGS-GMBH) <br> * claim 1 *      ./.. <br> -- | 10 | E: conflicting application <br> D: document cited in the application <br> L: citation for other reasons |

X | The present search report has been drawn up for all claims

&: member of the same patent family, corresponding document

| Place of search | Date of completion of the search | Examiner |
|---|---|---|
| Berlin | 09-10-1981 | SIMON |

EPO Form 1503.1  06.78

**0059270**

European Patent
Office

**EUROPEAN SEARCH REPORT**

Application number
EP 81 20 0238.4
- page 2 -

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | <u>DE - A - 2 324 256</u> (INTERROLL FÖRDER-TECHNIK GMBH & CO. KG) | . | |
| | -- | | |
| A | <u>CH - A - 312 492</u> (SKS FAHRRADWERKE AG) | | |
| | ---- | | |

TECHNICAL FIELDS
SEARCHED (Int. Cl.³)